Europäisches Patentamt

European Patent Office

Office européen des brevets

(11) Publication number: **0 218 563**
**A1**

# EUROPEAN PATENT APPLICATION

(21) Application number: **86850261.8**

(51) Int. Cl.⁴: **B 65 G 47/74**

(22) Date of filing: **16.07.86**

(30) Priority: **06.08.85 SE 8503719**

(71) Applicant: **Akerlund & Rausing Licens Aktiebolag, Box 547, S-175 26 Järfälla (SE)**

(43) Date of publication of application: **15.04.87 Bulletin 87/16**

(72) Inventor: **Nilsson, Sten, c/o A&R Licens AB, Box 457§S-17526 Järfälla (SE)**

(84) Designated Contracting States: **AT BE CH DE FR GB IT LI LU NL**

(74) Representative: **Avellan-Hultman, Olle, Avellan-Hultman Patentbyra AB P.O. Box 5366, S-102 46 Stockholm 5 (SE)**

(54) **Method and apparatus for transferring pieces of material between two mutually movable handling means.**

(57) "Method and apparatus for transferring pieces of material between two mutually movable handling means."

A method and an apparatus for transferring pieces of material between two mutually movable handling means (3, 4) at least one of which (4) is continuously rotating, whereas the other handling means during the transfer moment is rotating or linearly movable, and in which both conveyors are formed with carrier means for the piece of material. The carrier means of at least one of the conveyors (3) is adapted to be displaced during the transfer moment both with a movement along with a conveyor (3) and to be moved radially or sidewise in relation to said normal direction of movement, whereby the combined movement of said carrier means is positively guided so that the carrier means is brought to more exactly follow the central path for the carrier means of the second, continuously rotating conveyor (4) over a circle arc of for instance 30° or more, whereby the period for transferring pieces of material between the first (3) and the second conveyor (4) is prolonged.

Ref: P-1070

Method and Apparatus for Transferring Pieces of Material between
two Mutually Movable Handling Means
_____

The present invention generally relates to a method and an
apparatus for transferring pieces of material between two
handling means, at least one of which is continuously rotating.
The invention is useful both in apparatus having two rotating
handling means or one lineary movable and one rotating handling
means.

When transferring pieces of material between two mutually
movable conveyors or handling means, at least one of which is
rotating around a central shaft the piece of material carried by
one conveyor meets the second conveyor for transferring the piece
of material at a very exactly defined point, where the
transferring operation from one conveyor to the other must take
place. Previously known conveyors have some time been formed as
conveyor chains on which carrier means or handling means are
mounted and which have been adapted to be driven in a path which
at least partly is in common for the two chain conveyors and
along whith the transferring of the piece of material could be
made within the course of predetermined handling period.

Chains, however, in some cases give an unsufficient careful
guiding of the material and often restricts the speeds of
movement and handling and can make the machine unit complicated
and extensive and subject for frequent service. Also, chains are
not suited for transmitting pieces of material which must be
raised or lowered from the plane of the chain conveyer in
connection to receiving or depositing the piece of material or at
the very transfer moment.

It is also known to transfer pieces of material between two
rotating conveyors or one rotating and one lineary movable
conveyor in that the conveyors are stopped during the
transferring moment. This, however, substatinally reduces the
total handling speed and causes stresses on the parts of the
machine, which constantly must be stopped and restarted, and the theoretically possible speed of movement of the conveyor is strongly reduced considering the strength, demands and the possibility for the piece of the material to follow the quick stopping and restarting moments without being displaced on its carrier.

In machines having a need for a quick and accurate transferring of pieces of material between the conveyors, and especially in machines in which the piece of material must be raised or lowered from the plane of the conveyor, before, during or after the transportation of the piece of material it is suitable to form the conveyor rotatable around a central shaft, for instance as a rotatable table or a rotatable drum. The conveyor cooperating with the said rotatable conveyor can be rotatable or linearly movable. In both cases there are problems in transmitting the piece of material between the conveyors or the handling means since the rotating conveyor comes in direct transfer cooperation with the second conveyor at a very exactly defined point of the rotation movement. In some cases it is possible to accept a slight relative movement of the piece of material at the transfer moment, for instance an angular displacement of a couple of degrees, but still the transfer must be made extremely quickly as an example can be mentioned that for a rotation speed of for instance 25 r/m and an allowable transfer displacement during 2 degree rotation of the conveyor the transferring must be made within the course of 25/60 x 2/360 s = 0.0023 s, and even for this relatively slow speed of rotation this time is so short that there are transferring problems.

The object of the invention therefore has been to solve the problem of prolonging the handling speed when transferring pieces of material between two mutual movable conveyors or handling means, at least one of which is continuously rotatable, preferably rotatable around a central shaft, and in which the two conveyors are formed with carrier means for the piece of material.

According to the invention the said problem is solved in that the carrier means for the piece of material of at least one of the conveyors is displaced during the transfer moment from one conveyor to the second conveyor both in the advancing direction of the conveyor and in a direction which is perpendicular to a tangent at the transferring point of the rotating conveyor or one of the rotating conveyor in such movement that the combined movement of the said carrier means coincide with the vector of movement for the second conveyor.

As mentioned above the conveyors may be of the same or different kinds, and one conveyor can be rotating and the other conveyor linearly operable, or both conveyors can be rotating. In case both conveyors are rotating they can have different diameters supposing that they rotate with the same peripheral speed at the centers of their carrier means.

The cross displacable carrier means can be provided in any of the two conveyors or in both conveyors, but normally it is quite sufficient that one of the conveyors is formed with such cross displacabe carrier means.

The invention has been developed especially in connection to taking up container lids which by means of the conveyors are to be transferred to and be applied to containers, and in the following the invention will mainly be described with reference thereto. It is, however, to be understood that the invention is useful within many other technical fields and for handling of many other types of pieces of material, and that many different modifications may be presented within the scope of the appended claims.

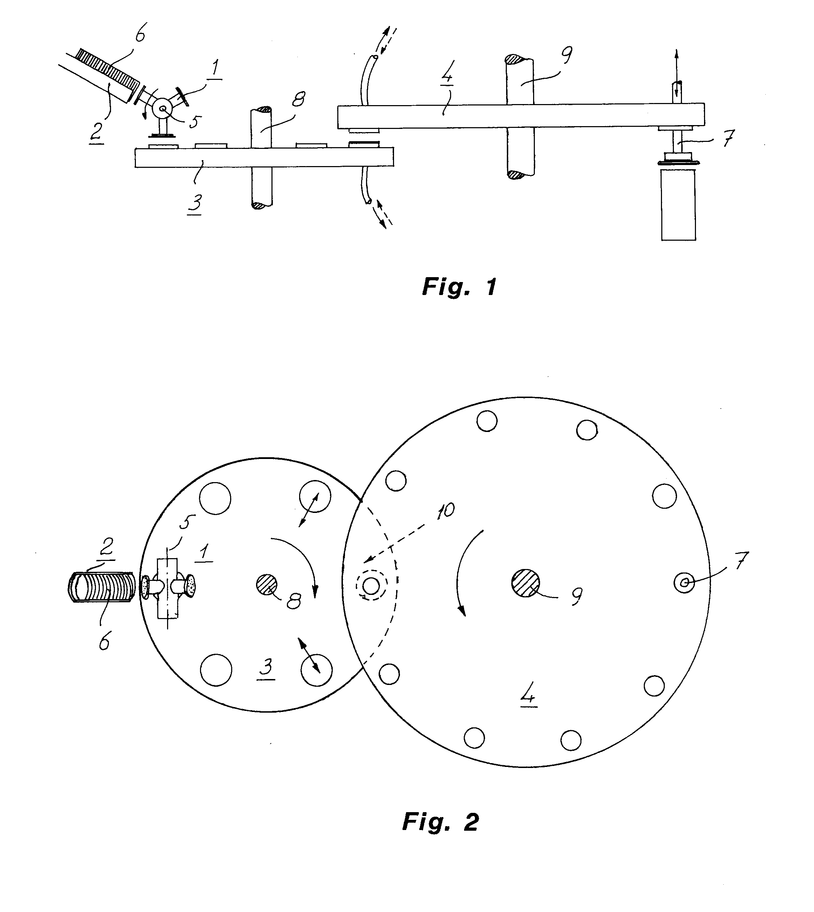

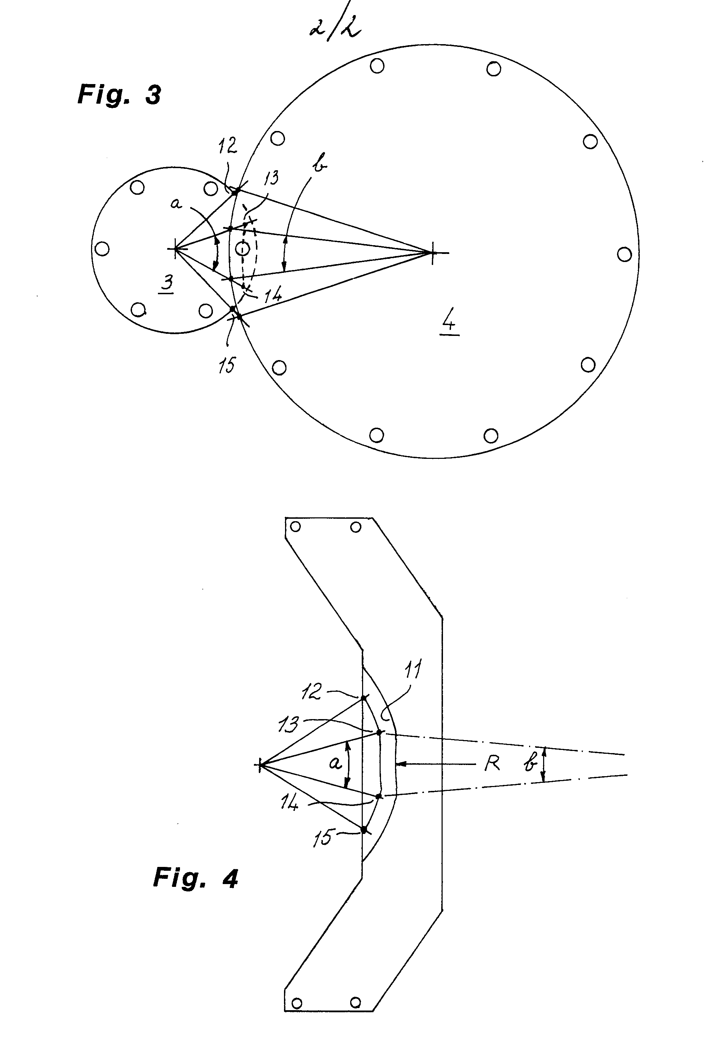

In the accompanying drawings figure 1 diagrammatically shows a side view of a transfer apparatus according to the invention, and figure 2 is a top view of the apparatus according to figure 1. Figure 3 diagrammatically illustrates the function of the apparatus according to the invention and figure 4 shows a guide curve for providing the cross movement of the carrier means in an apparatus of the type shown in figures 1 and 2.

The apparatus shown in figures 1 and 2, which is only one of many possible examples of an apparatus according to the invention, is intended for taking up and transferring lid blanks from one conveyor to a second conveyor from which the lids are introduced and attached in one end of a container. The illustrated apparatus comprises a traple lid collector 1, which receives lids from a lid magasine 2 and transfers same to a first, intermittently operating conveyor 3 which in turn transfers the lid to a second, continuously conveyor 4 from which the lids are introduced in an open end of a container tube by means of a non-illustrated plunge mechanism.

In the illustrated case, the lid collector comprises a suction-blow mechanism having three arms and being rotatable around a horizontal shaft 5, and in which the arms one by one collects a lid 6 from a lid magasin 2, is rotated 120⁰ and deposits the lid on a suction means on the intermittently rotating first conveyor 3, which at the time of receiving the lid 3 is still standing for a short moment. At the same time as a first arm by suction operation fetches a lid from the lid magasine a second arm deposits another lid on the first conveyor by a blowing operation. The lid is kept to the conveyor 3 by suction action and is successively moved to a position for leaving the lid to a projecting plunge 7 provided on the underside of the second conveyor 4 and having a suction means for holding the lid. Since the said second conveyor 4 is moving continuously the lid must be deposited on the second conveyor 4 while being moved, whereby the first conveyor is likewise rotating.

The two conveyors 3 and 4 are mounted on vertical shafts 8 and 9 which are spaced from each other so that the conveyors overlap each other at the transferring zone 10.

For the transferring of the piece of the material, in this case the lid 6, it is essential that the peripheral speed at the center of the suction plates of the two conveyors are identical during the transfer moment, but the conveyors may have different diameters. As best evident from figure 2 the conveyor 3 is in the illustrated case formed with 6 carrier stations, and this conveyor is intended to rotate with a speed of 25 r/m, whereas the conveyor 4 is formed with ten suction stations and is intended to the speed of 15 r/m, whereby the apparatus in the illustrated case handles 150 lids/minute.

Since both conveyors rotate at the transfer moment the center of the suction plates at the transfer zone are located exactly over each other only momentary, and it is not possible to transfer the lid from the conveyor 3 to the conveyor 4 in this extremely short period of time. For making it possible to safely and accurately transfer the lids from the conveyor 3 to the conveyor 4 it is necessary to increase the available transferring time.

As best illustrated in connection to figure 3 said transferring time is increased in that the suction plate of one conveyor, in this case the suction plate of the first conveyor 3, is radially displacable in the conveyor guided by a guide curve 11 shown in figure 4, so that the suction plate is brought to exactly follow the movement of the suction plate of the second conveyor 4 during the very transfer moment. This is made in that the suction plate

- originally is located in a retracted position, point 12,

- wherupon the suction plate by the action of the guide curve 11 is expelled so that the center thereof falls on the center line for the suction plate of a second conveyor 4 some distance before the centers of the suction plates are located on the normal line extending exactly between the center axis 8 and 9 of the conveyors, point 13,

- from which point the curve changes direction and exactly follows the line of rotation of the second conveyor 4 to a point 14 some distance behind the normal line between the center shafts 8 and 9,

- whereupon the suction plate of the first conveyor 3 is finally retracted, point 15, and is ready for collecting a new lid.

The guiding of the suction plates is made as conventional in that the suction plates are spring loaded in a direction towards the center and in that they are formed with a curved follower which during the rotation enters the guide curve 11.

In order to allow a safe and accurate transferring of a piece of material from one conveyor to another the transferring interval ought to be extended in a circle arc of about 30° or more. In the illustrated case the transferring angle "a" between the conveyors has been increased from nearly $0^{\circ}$ to $38.25^{\circ}$ for the first conveyor (corresponding to "b" $13,5^{\circ}$ for the second conveyor). For a rotation speed of the first conveyor of 25 r/m this corresponds to a transferring period of 0.15 second which is a quite sufficient time for accuratly and safely transferring lids from the first conveyor 3 to the second conveyor 4. It is obvious that the transferring period can be further extended by giving the guide curve 4 another design.

In the above described case the suction plates of the first conveyor 3 are movable radially during the rotating transfer moment but it is obvious to the expert that it is as well possible to have the suction plate of the second conveyor move radially in a corresponding way.

It is also obvious that the invention is useful also for an apparatus comprising one linearly movable conveyor and one conveyor which is rotating during the transfer moment.

CLAIMS

1. Method of transferring pieces of material between two mutually movable conveyors (3, 4) at last one of which (4) is rotating continuously around a preferably central shaft (9), and in which both conveyors are formed with carrier means for the piece of material, c h a r a c t e r i z e d in that the carrier means for the piece of material in at least one of the conveyors (3) during the transfer moment from one conveyor to the second conveyor is moved both in the advancing direction of the conveyor and in a direction which is perpendicular to a tangent at the transfer point (central line 8-9) of the continuously rotating conveyor 4 or one of the rotating conveyors and so that the combined movement of the said carrier means coincides with the movement-vector for the carrier means of the second conveyor.

2. Method according to claim 1, in which both conveyors are rotatable, c h a r a c t e r i z e d in that the carrier means of one conveyor (3) is radially displacable and is adapted from a retracted position during the rotation of the conveyor to successively being expelled some distance and thereafter to be brought to be moved along the peripheral arc of the second conveyor (4) and so that the transfer movement is extended over a circle arc of more than 30°.

3. Method according to claim 1 or 2, c h a r a c t e-
r i z e d in that one conveyor is intermettently rotating or movable linearly, whereas the second conveyor is continuously rotating.

4. Method according to claim 1, 2 or 3, c h a r a c t e-
r i z e d in that the carrier means of only one conveyor or of both cooperating conveyors are displacable during the transfer moment in two directions which are perpendicular to each other.

5. Apparatus for executing the method according to any of the preceding claims for transferring pieces of material between two mutually movable conveyors (3, 4) at least one of which (4) is continuously rotatable around a preferably central shaft (9), and in which both conveyors are formed with carrier means for the piece of material, c h a r a c t e r i z e d in that the carrier means for the piece of material of at least one conveyor (3) is provided movable both in the feeding direction in said conveyor and in a direction which is perpendicular to a tangent of the continuously rotating coneyor (4), and in that the carrier means which is movable into perpendicular directions is adapted to move during the transfer moment along a path which coincides with the movement path for the carrier means of the second conveyor (4).

6. Apparatus according to claim 5, c h a r a c t e-r i z e d   in that the radially movable carrier means is spring biassed in a direction to a retracted position, and in that said carrier means some distance in advance of, during and some distance subsequent to the transfer moment is positively guided by a curve (11) and a curve follower so that the said carrier means of said one conveyor (3) during a prolonged transfer moment is brought to exactly follow the center line for the carrier means of the second conveyor (4).

7. Apparatus according to claim 6, c h a r a c t e-r i z e d  in that both conveyors are rotating during the transfer moment, and in that the guide curve (11) is formed so that the transferring is extended over a rotation angle of more that $30^o$.

8. Apparatus according to claim 5 or 6, c h a r a c t e-r i z e d  in that the delivering first conveyor (3) is rotatable or movable linearly, whereas the second receiving conveyor (4) in both cases is continuously rotating.

9. Apparatus according to claim 8, c h a r a c t e-r i z e d  in that the delivering first conveyor (3) is intermittently operating and is still standing when receiving a piece of material (6) but is moving when transferring said piece of material to the second, receiving conveyor (4).

Fig. 1

Fig. 2

0218563

2/2

Fig. 3

12

13

b

a

3

14

15

4

Fig. 4

12

11

13

c

a

R

b

14

15

**European Patent Office**

**EUROPEAN SEARCH REPORT**

Application number

| | DOCUMENTS CONSIDERED TO BE RELEVANT | | EP 86850261.8 | |
|---|---|---|---|---|

| Category | Citation of document with indication, where appropriate, of relevant passages | Relevant to claim | CLASSIFICATION OF THE APPLICATION (Int. Cl.4) |
|---|---|---|---|
| A | GB - A - 1 396 226 (ZANASI NIGRIS S.P.A.)  <br> * Fig. 1,2 * <br> -- | 1,5 | B 65 G 47/74 |
| A | US - A - 4 511 027 (ZAMBONI) <br> * Fig. 1-4 * <br> -- | 1,5 | |
| A | US - A - 3 273 309 (WOLF) <br> * Fig. 1-4 * <br> ---- | | |

TECHNICAL FIELDS SEARCHED (Int. Cl.4)

B 65 G 47/00

The present search report has been drawn up for all claims

| Place of search | Date of completion of the search | Examiner |
|---|---|---|
| VIENNA | 11-11-1986 | WIDHALM |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82